# EUROPEAN PATENT APPLICATION

(11) **EP 1 619 471 A1**
(43) Date of publication of application: **25.01.2006**
(21) Application number: 05015685.0
(22) Date of filing: 19.07.2005
(51) Int. Cl.: G01C 19/56, G01P 9/04

(54) **MEMS gyroscope having coupling springs**

(30) Priority: 19.07.2004 KR 2004056011
(71) Applicant: SAMSUNG ELECTRONICS CO., LTD., Suwon-si, Gyeonggi-do (KR)
(72) Inventor: Lee, Sang-woo, Dongjak-gu Seoul (KR); Lee, Byeung-leul, Yongin-si Gyeonggi-do (KR); Kim, Jong-pal, Gwanak-gu Seoul (KR); Choi, Joon-hyock, Mapo-gu Seoul (KR)
(74) Representative: Grünecker, Kinkeldey, Stockmair & Schwanhäusser Anwaltssozietät

(57) **Abstract**

A MEMS gyroscope with coupling springs and mass bodies symmetrical to one another and relatively movable in a vertical direction with respect to a substrate, where a coupling spring connects the mass bodies and moves the mass bodies in a vertical direction as another one of the mass bodies moves in the opposite vertical direction.

## Description

### CROSS-REFERENCE TO RELATED APPLICATIONS

This application claims the benefit of Korean Patent Application No. 2004-56011, filed July 19, 2004, in the Korean Intellectual Property Office, the disclosure of which is incorporated in its entirety herein by reference.

### BACKGROUND OF THE INVENTION

### 1. Field of the Invention:

The present invention relates to a micro electronic mechanical system (MEMS) gyroscope, and more particularly to a MEMS gyroscope having coupling springs capable of being driven in a vertical direction to synchronize with a driving resonant frequency.

### 2. Description of the Related Art:

In general, the gyroscopes for detecting a rotational angular velocity have been used as a core part of navigation devices for vessels, aircrafts, and so on, since long ago. With the development of MEMS technology, gyroscopes are used even as navigation devices for cars or devices for vehicles or the anti-shake feature of high-magnification video cameras.

Such gyroscopes are devices that use the principle of generating the Coriolis force in the third direction perpendicular to the first and second axis directions, when applied with a rotational force of constant angular velocity in the second axis direction vertical to a mass body invariably vibrating in the first axis direction, and convert displacement of the sensing mass body caused by the Coriolis force into a capacitance change and detect a rotational angular velocity.

In order to generate and detect the Coriolis force, the gyroscopes are provided therein with sensing electrodes and mass bodies capable of vibrating in predetermined directions. Hereinafter, 'driving direction' refers to a direction in which mass bodies vibrate in the gyroscope, 'input direction' refers to a direction in which rotational angular velocity is inputted or applied to the gyroscope, and 'sensing direction' refers to a direction in which the Coriolis force generated on the mass body is sensed.

The driving, input, and sensing directions are set to be perpendicular to one another in space. Usually, gyroscopes using MEMS technology have coordinate axes in three directions consisting of two directions (hereinafter, referred to as a 'horizontal direction') parallel with the surface of a substrate and perpendicular to each other and a direction (hereinafter, referred to as a 'vertical direction') perpendicular to the surface of the substrate.

In general, gyroscopes are classified into gyroscopes of horizontal type (Z-axis) and gyroscopes of vertical type (X-axis or Y-axis). Z-axis gyroscopes have the horizontal direction as the driving and sensing directions and the vertical direction as the input direction (Z-axis), and X-axis or Y-axis gyroscopes have the X-axis or Y-axis direction as the input direction.

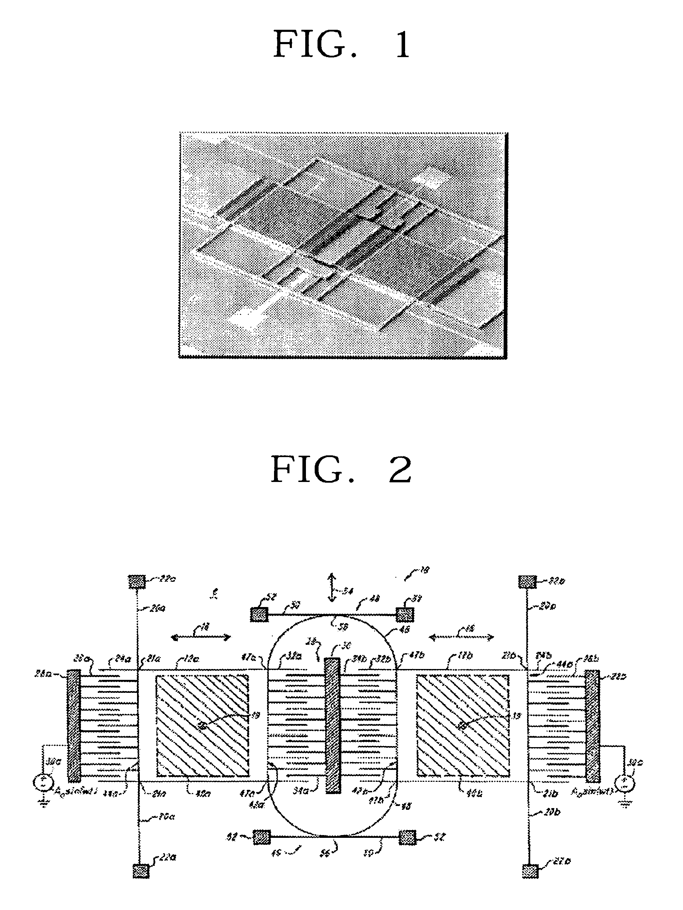

Such conventional gyroscopes have a problem in that the external application of acceleration is treated in the same way as the application of angular velocity. In order to solve such a problem, tuning fork gyroscopes have been proposed as shown in FIG. 1. If angular velocity is externally applied, a plurality of mass bodies in the tuning fork gyroscope move in different directions, and, if acceleration is externally applied, the tuning fork gyroscope moves the plurality of mass bodies in the same direction. Therefore, the tuning fork gyroscope can prevent the external application of acceleration from being treated in the same way as the external application of angular velocity. However, the tuning fork gyroscope shown in FIG. 1 has a problem of low yields due to the difficulties in synchronizing the driving frequency for driving the plurality of mass bodies.

In order to solve this problem, a tuning fork gyroscope has been proposed that uses coupling beams as shown in FIG. 2. However, this tuning fork gyroscope is able to drive only on a plane surface.

### SUMMARY OF THE INVENTION

An aspect of the present invention addresses the above problems and/or disadvantages and provides at least the advantages described below. Accordingly, an aspect of the present invention is to provide a MEMS gyroscope having coupling springs to enable driving in a vertical direction.

In order to achieve the above-described aspects of the present invention, there is provided a MEMS gyroscope comprising a plurality of mass bodies symmetrical to one another and relatively movable with respect to a substrate in a direction vertical to a surface of the substrate; and a coupling spring connected between the plurality of mass bodies and moving one of the mass bodies in a vertical direction as another one of the mass bodies moves in an opposite vertical direction.

Further, the MEMS gyroscope comprises first and second driving electrodes for vibrating the plurality of mass bodies in the vertical direction; first and second mass bodies relatively movable with respect to the substrate in a horizontal direction, being one of directions parallel with the surface of the substrate, and moving in the horizontal direction by the Coriolis force generated by an application of angular velocity; and first and second sensing electrodes measuring displacement of the first and second mass bodies in the horizontal direction.

The first driving electrode, first mass body, and first sensing electrode are symmetrical to the second driving electrode, second mass body, and second sensing electrode, respectively, with respect to the coupling spring.

The driving and sensing electrodes are formed in a comb structure.

The MEMS gyroscope further comprises a vertical sensing electrode sensing displacement of the plurality of mass bodies in the vertical direction, which are driven by the first and second driving electrodes.

### BRIEF DESCRIPTION OF THE DRAWINGS

The above aspects and features of the present invention will be more apparent by describing certain exemplary embodiments of the present invention with reference to the accompanying drawings, in which:

FIG. 1 is a view for schematically showing a conventional tuning fork gyroscope;

FIG. 2 is a top view showing a tuning fork gyroscope using coupling beams; and

FIG. 3 is a top view showing a MEMS gyroscope provided with coupling springs consistent with an exemplary embodiment of the present invention.

### DETAILED DESCRIPTION OF EXEMPLARY EMBODIMENTS

Hereinafter, the present invention is described in detail with reference to the accompanying drawings.

In the following description, same drawing reference numerals are used for the same elements even in different drawings. The matters described in the description, such as construction details and elements, are those which assist in a comprehensive understanding of the invention. Thus, it is apparent that the present invention can be carried out without these defined matters. Also, well-known functions or constructions are not described in detail since they would obscure the invention with unnecessary detail.

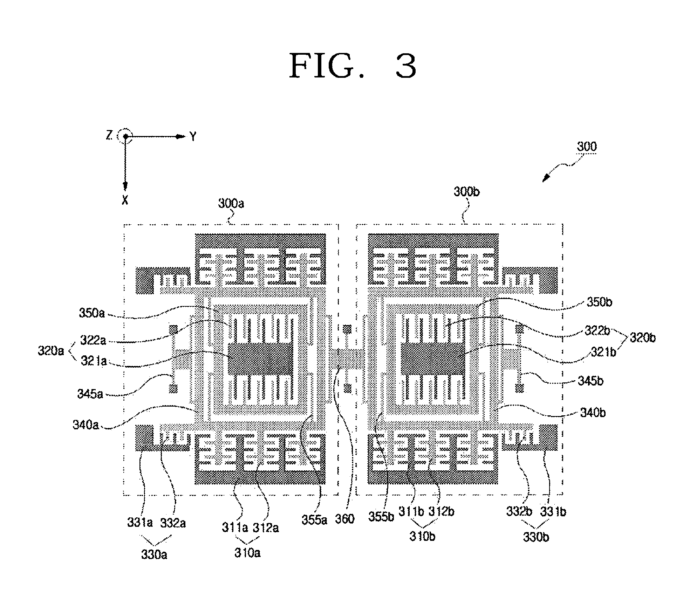

FIG. 3 is a top view showing a MEMS gyroscope having coupling springs consistent with an exemplary embodiment of the present invention. In FIG. 3, the MEMS gyroscope consistent with an exemplary embodiment of the present invention includes first and second gyroscopes bilaterally symmetrical to each other with respect to a coupling spring.

Since the first and second gyroscopes 300a and 300b in this embodiment are bilaterally symmetrical to each other with respect to the coupling spring 360, hereinafter, description will be made only on the first gyroscope 300a of the first and second gyroscopes 300a and 300b.

The first gyroscope 300a has a first internal mass body 350a and a first external mass body 340a, a driving electrode 310a for driving the first external mass body 340a, horizontal sensing electrodes 320a for sensing displacement in the horizontal direction of the first internal mass body 350a, vertical sensing electrodes 330a for sensing displacement in the vertical direction of the first external mass body 340a, and a first external spring 345a and a first internal spring 355a for supporting the first external mass body 340a and the first internal mass body 350a respectively, which are disposed on a substrate (not shown).

The first external mass body 340a has a rectangular shape, and movably floats over the substrate (not shown). The left side of the first external mass body 340a is fixed on the substrate by the first external spring 345a, and the right side of the first external mass body 340a is connected to the second gyroscope 300b by the coupling spring 360.

The first internal mass body 350a has a rectangular shape smaller than the first external mass body 340a, and movably floats over the substrate. The first internal mass body 350a is disposed within the inner space of the first external mass body 340a. The first internal mass body 350a is fixed to the first external mass body 340a by the first internal spring 355a. The first internal spring 355a has a leaf-spring shape, so the first internal mass body 350a is supported by the first internal spring 355a to relatively move in the Y direction with respect to the first external mass body 340a.

The driving electrodes 310a are respectively formed on one side of the first external mass body 340a in the X direction, and disposed on the same plane as the first external mass body 340a on the substrate. The driving electrodes 310a consist of a fixed electrode 311a and a moving electrode 312a which are combined with each other in a comb structure.

The horizontal sensing electrodes 320a are formed in the inner space of the first internal mass body 350a. Like the driving electrodes 310a, the horizontal sensing electrodes 320a consist of a fixed electrode 321a and a moving electrode 322a which are combined with each other in a comb structure. The fixed electrode 321a is fixed on the substrate (not shown), and the moving electrode 322a is fixed on the first internal mass body 350a.

The vertical sensing electrodes 330a are formed on the first external mass body 340a at the corners furthest from the coupling spring 360. The vertical sensing electrodes 330a consist of a fixed electrode 331a and a moving electrode 332a which are combined with each other in a comb structure. The fixed electrode 331a is fixed on the substrate (not shown), and the moving electrode 332a is fixed on the first external mass body 340a.

Hereinafter, description will be made of the operations of the MEMS gyroscope having the above structure consistent with an exemplary embodiment of the present invention.

If the driving electrodes 310a are applied with a voltage changing with time, the first external mass body 340a vibrates in the Z direction driven by an electrostatic force generated by the driving electrodes 310a. Because the first internal mass body 350a is relatively fixed by the first internal spring 355a to the first external mass body 340a in the Z direction, the first internal mass body 350a vibrates in the Z direction together with the first external mass body 340a.

When the first external mass body 340a and first internal mass body 350a vibrate in the Z direction, the coupling spring 360 operates like a seesaw so as to move the second external mass body 340b and second internal mass body 350b in the -Z direction.

Thus, the first and second external mass bodies 340a and 340b vibrate in the vertical direction, having opposite phases, so as to have the mass bodies driven with the same resonant frequency.

Although the description has been made of the above exemplary embodiment in which the first external and internal mass bodies 340a and 350a move in the Z direction and the second external and internal mass bodies 340b and 350b move in the -Z direction, it is possible to move the first external and internal mass bodies 340a and 350a in the -Z direction whereas the second external and internal mass bodies 340b and 350b move in the Z direction.

The vertical sensing electrodes 330a measure the displacement of the first external mass body 340a in the Z direction, and the measured value is supplied to a controller (not shown). The controller controls an electromagnetic field applied to the driving electrodes 310a so that the first external mass body 340a can effectively vibrate in the Z direction based on the measured value of the vertical sensing electrodes 330a.

If angular velocity is applied to the first external mass body 340a in the X direction during the vibrations of the first external and internal mass bodies 340a and 350a, the first internal mass body 350a moves in the X direction together with the first external mass body 340a by the first internal spring 355a. At this time, the Coriolis force is applied to the first internal mass body 350a in the Y direction so that the first internal mass body 350a moves in the Y direction. Thus, the distance varies between the fixed electrode 321a and the moving electrode 322a of the horizontal sensing electrodes 320a, which causes the change of capacitance of the horizontal sensing electrodes 320a according to such a change of the distance. The controller (not shown) calculates the Coriolis force using the change of the capacitance of the horizontal sensing electrodes 320a, thereby enabling calculation of the angular velocity or angular acceleration caused by an external force applied in the X direction.

In the present exemplary embodiment, the vibration of the first external mass body 340a in the Z direction is controlled by the driving electrodes 310a having the fixed electrode 311 a and moving electrode 312a formed on the same plane as that of the first external mass body 340a. Thus, the driving electrodes 310a can be simultaneously formed during the manufacturing process of the other components such as the first external mass body 340a, the first internal mass body 350a, and so on. Thus, whole components of the gyroscope can be formed by use of one mask, simplifying the manufacturing process of the gyroscope.

Further, since the fixed and moving electrodes 311a and 312a are disposed on the same plane, the intervening distance can be easily formed to become shorter. Thus, it can be precisely controlled to drive the first external mass body 340a and detect the displacement of the first internal mass body 350a.

As described above, the MEMS gyroscope having coupling springs can synchronize with the resonant frequency of the mass bodies that are vertically driven, so as to bring out an advantage of higher yield.

The present invention has an advantage of completely removing the influence of the linear acceleration and angular acceleration by disposing the mass bodies to be coincident with the sensing direction.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A micro electronic mechanical system (MEMS) gyroscope, comprising:
a plurality of mass bodies symmetrical to one another and relatively movable with respect to a substrate in a direction vertical to a surface of the substrate; and
a coupling spring connected between the plurality of mass bodies and which moves one of the mass bodies in a vertical direction as another one of the mass bodies moves in an opposite vertical direction.

2. The MEMS gyroscope as claimed in claim 1, further comprising:
first and second driving electrodes which vibrate the plurality of mass bodies in the vertical direction;
first and second mass bodies relatively movable with respect to the substrate in a horizontal direction being one of directions parallel with the surface of the substrate, and which move in the horizontal direction by the Coriolis force generated by an application of angular velocity; and
first and second sensing electrodes which measure displacement of the first and second mass bodies in the horizontal direction.

3. The MEMS gyroscope as claimed in claim 2, wherein the first driving electrode, first mass body, and first sensing electrode are symmetrical to the second driving electrode, second mass body, and second sensing electrode, respectively, with respect to the coupling spring.

4. The MEMS gyroscope as claimed in claim 2, wherein the driving and sensing electrodes are formed in a comb structure.

5. The MEMS gyroscope as claimed in claim 2, further comprising a vertical sensing electrode which senses displacement of the plurality of mass bodies in the vertical direction.

6. The MEMS gyroscope as claimed in claim 2, wherein a time-varying voltage is applied to the driving electrodes.
